# EUROPEAN PATENT SPECIFICATION

(11) **EP 2 024 208 B1**
(45) Date of publication and mention of the grant of the patent: **18.09.2013**
(21) Application number: 07748509.2
(22) Date of filing: 23.05.2007
(51) Int. Cl.: B60T 10/02, B60T 13/58, B60T 10/00, B60T 10/04, B60W 10/18, B60W 30/18, B60T 8/00, B60T 8/24, B60W 10/184, B60W 10/198, B60W 10/196

(54) **A SYSTEM AND A METHOD FOR CONTROLLING BRAKING OF A MOTOR VEHICLE DURING DOWNHILL DRIVING**
SYSTEM UND VERFAHREN ZUR BREMSSTEUERUNG EINES KRAFTFAHRZEUGS BEI DER BERGABFAHRT
SYSTÈME ET PROCÉDÉ DE COMMANDE DE FREINAGE D'UN VÉHICULE AUTOMOBILE LORS DE LA CONDUITE EN DESCENTE

(30) Priority: 26.05.2006 SE 0601165
(43) Date of publication of application: 18.02.2009
(73) Proprietor: Scania CV AB (publ), 151 87 Södertälje (SE)
(72) Inventor: RICKMAN, Johnny, S-151 38 Södertälje (SE); SELLING, Tomas, S-120 51 Arsta (SE); JENSEN, Anders, S-646 32 Gnesta (SE); ESKILSON, Anders, S-120 48 Enskede (SE); CARLSSON, Ulf, S-151 38 Södertälje (SE)
(86) International application number: PCT/SE2007/050348
(87) International publication number: WO 2007/139489

(56) References cited:
- WO-A1-01/45992
- WO-A1-01/81138
- WO-A1-02/085661
- WO-A1-2004/048172
- WO-A1-2005/080166
- DE-A1- 4 313 685
- DE-A1- 19 604 391
- GB-A- 2 080 458
- GB-A- 2 337 567
- US-A- 5 496 098
- US-A- 5 634 446

## Description

### TECHNICAL FIELD

The present invention relates to a system for braking of a motor vehicle during downhill driving, said vehicle being provided with a service frictional braking device adapted to act upon at least one wheel axle of the vehicle for obtaining a braking action and an auxiliary braking device adapted to act upon a driven wheel axle of the vehicle for obtaining a braking action and comprising a retarder brake and a lever for activating the retarder brake by the driver of the vehicle, said system comprising a braking control means adapted to select an auxiliary braking mode in which the retarder brake is activated to act when it is desired to obtain a braking action possible to obtain by said auxiliary braking device. The invention also relates to a method for controlling braking of such a motor vehicle during downhill driving. Furthermore, the invention relates to a computer program comprising computer program code for implementing such a method, a computer program product comprising a data storage medium readable by an electronic unit and having said computer program stored thereon, and an electronic control unit.

### BACKGROUND ART

The present invention is applicable to motor vehicles provided with an auxiliary braking device, comprising a retarder brake and possibly an exhaust brake, especially heavy motor vehicles such as lorries, towing vehicles and buses mostly having both a retarder brake and an exhaust brake. Such a retarder brake is a hydraulic brake, which acts upon a driven wheel axle of the vehicle for instance by acting on the output shaft of a gear box of the vehicle. The exhaust brake also indirectly acts upon the driven wheel axle of the vehicle by causing a resistance to the rotation of the output shaft of the engine of the motor vehicle by regulating the flowing resistance of exhaust gases from the engine. It is preferred to use such an auxiliary braking device when a braking action is to be applied to such a vehicle for saving service brakes, normally called wheel brakes, of said service frictional braking device.

However, the efficiency of a retarder brake is dependent upon the speed of the vehicle or the speed of the motor, which means that it may normally not be able to alone keep a heavy motor vehicle, especially a tractor and a trailer being fully loaded, at a constant low speed when driving in a steep downhill slope. Another situation in which said auxiliary braking device may not be able to provide the braking action asked for when driving downhill is when gear shifting is to be carried out and the speed of the vehicle is not allowed to increase during this gear shifting, which is especially important when the vehicle is provided with an automatic or semi-automatic transmission gearbox, in which a zero torque has to be present at a clutch of the gearbox during gear shifting. If the speed of the vehicle would in such a case increase during gear shifting it would be necessary to raise the number of revolutions of an output shaft of an engine of the vehicle, and this number of revolutions may already be close to an upper limit thereof, so that the engine may be damaged as a consequence of an unacceptably high number of revolutions of the engine output shaft. The disappearance of the action of the motor-brake during such gear shifting will increase the risk of a shortcoming of said auxiliary braking device when trying to keep the vehicle at a constant speed during gear shifting in downhill driving. If the vehicle in such a case has an exhaust brake this could then theoretically be used together with the retarder brake, but that would under certain conditions, especially at low speeds, not be enough for obtaining the necessary braking action.

The solution to this problem is that braking control systems of the type defined in the introduction has been designed to simultaneously use both said auxiliary brakes and the service brakes of said service frictional braking device for obtaining braking of the vehicle when desired in downhill driving. EP 1567399 describes a braking control system in which both an auxiliary braking device and a service frictional braking device are used for applying a braking action to a motor vehicle during downhill driving for making these two devices share a total braking torque to be obtained in a suitable way. The service frictional braking device and the auxiliary braking device of this vehicle are always both used when braking the vehicle during downhill driving, but the proportion of the braking action provided by the respective device is dependent upon the conditions prevailing. This results in a use of said service brakes in many situations in which the auxiliary braking device would alone be able to obtain the braking action asked for, so that the lifetime of parts of said service brakes is reduced.

WO 2004033244 describes a braking control system which uses the service frictional braking device for obtaining a braking action when gear shifting is carried out during downhill driving for keeping the speed of the vehicle at a constant level. DE 102 16 546 A1 also describes a braking control system using the service frictional braking device of a vehicle provided with an automatic transmission gearbox for keeping the vehicle at a constant speed when a gear shifting action is carried out during downhill driving.

WO 2005080166 A1 describes a method for braking a vehicle where a supplementary brake is only activated with a braking effect that is possible to maintain during a whole downhill run without the cooling system becoming overheated. DE 43 13 685 A1 describes vehicle braking control with hydrodynamic retarder involving constant speed braking with hand setting control and with adjustment using footbrake pedal to set different speeds. DE 196 04 391 A1 describes a method for controlling the brake system of a vehicle having a duty brake and a sustained-action brake (retarder), where the actual braking moment produced by the sustained-action brake, as well as the braking command of the driver, are taken into consideration in the electrically controlled adjustment of the duty brake. WO 01811138 A1 relates to a device for controlling an auxiliary brake of a heavy vehicle, where the auxiliary brake consists, for example, of a retarder, which is controlled by a chosen braking force instead of being controlled by a certain braking moment.

### DISCLOSURE OF THE INVENTION

The object of the present invention is to provide a system for controlling braking of a motor vehicle during downhill driving, by means of which the above-indicated problems may be reduced.

This object is according to the invention obtained by providing a system of the type defined in the introduction, which comprises calculating means adapted to upon activation of said retarder brake by actuating said lever by the driver for applying a braking action to the vehicle when driving downhill, based upon values of parameters of the driving conditions of the vehicle, calculate whether said auxiliary braking device is able to alone obtain said braking action to be applied to the vehicle, and that said braking control means is adapted to activate said service frictional braking device to assist said auxiliary braking device in braking the vehicle when the result of the calculation of said calculating means is that the auxiliary braking device is not able to alone obtain said braking action to be applied to the vehicle. This means that when the driver requests a braking action from the retarder brake by actuating said lever when driving downhill the service frictional braking device is activated to assist the auxiliary braking device in braking the vehicle as soon as the auxiliary braking device may not alone obtain said braking action. This means that it is reliably ensured that the necessary braking action is always applied to the vehicle and that the service brakes of the vehicle are still saved as much as possible. Thus, it is normally expected that only the retarder brake will brake when it is activated by actuating said lever but the service frictional braking device is here also activated by said lever actuation would the braking action thereof be needed.

According to the invention the braking control system is adapted to control braking of a motor vehicle provided with a gearbox, said calculating means is adapted to consider an order of gear shifting during downhill driving as a said driving condition of the vehicle and to calculate whether said auxiliary braking device is able to keep the speed of the vehicle within a predetermined range during a gear shifting under the conditions prevailing, and said braking control means is adapted to, upon activation of said retarder brake by actuating said lever, activate said service frictional braking device to assist said auxiliary braking device when said calculating means determines that it will not be possible to keep the speed value of the vehicle within said range by braking action from only said auxiliary braking device during a gear shifting action. This means that in spite of the fact that braking is carried out by said auxiliary braking device to an extent being as large as possible during downhill driving it may still be ensured that the speed of the vehicle will be kept within said predetermined range during a gear shifting, for instance for protecting parts of the engine. There will be an individual said predetermined speed range for each gear shifting step. According to an embodiment of the invention said calculating means may then be adapted to calculate whether said auxiliary braking device may under the driving conditions of the vehicle prevailing be able to keep the speed of the vehicle at a substantially constant level during a gear shifting when an order is given to carry out a gear shifting during downhill driving, and said braking control means is adapted to, upon activation of said retarder brake by actuating said lever for braking the vehicle for carrying out a gear shifting during downhill driving, activate said service frictional braking device to assist said auxiliary braking device in braking the vehicle when said calculating means determines that said auxiliary braking device will not be able to alone keep the speed of the vehicle at a substantially constant level during said gear shifting. This avoids that the number of revolutions of the output shaft of an engine of the vehicle will rise above a maximum limit value when said number of revolutions is close to this limit value when the gear shifting is to be carried out.

According to an embodiment of the invention the system is adapted to control braking of a motor vehicle having a speed indicator, said calculating means is adapted to base said calculation on information from said speed indicator about the actual speed of the vehicle and information from said braking control means about a value of a total braking torque corresponding to said braking action to be applied to the vehicle, and said calculation means is adapted to determine that said auxiliary braking device is not able to alone obtain said braking action to be applied to the vehicle if the speed of the vehicle is below a first predetermined speed value for a given value of said total braking torque. Said total braking torque will mainly be dependent upon the weight of the vehicle and the inclination of the road, and said calculation means will in this way accomplish an activation of said service frictional braking device as soon as the speed of the vehicle falls below said first predetermined speed value for a given value of a said total braking torque for ensuring that this total braking torque value may be obtained by the braking devices of the vehicle. According to an embodiment of the invention said calculating means is adapted to use a said first predetermined speed level which decreases when the value of said total braking torque increases, which ensures that said value of said total braking torque may always be obtained.

According to another embodiment of the invention said calculation means is adapted to base said calculation on information from said braking control means about a value of the total braking torque corresponding to said braking action to be applied to the vehicle and compare this value of total braking torque with a predetermined total braking torque threshold value and determine that the auxiliary braking device is not able to alone obtain said braking action to be applied to the vehicle when said value of total braking torque exceeds said total braking torque threshold value. This means that if the total braking torque exceeds said total braking torque threshold value said service frictional braking device will automatically be activated irrespectively of the actual speed of the vehicle for ensuring that the braking action necessary to apply to the vehicle is reliably obtained. For instance when driving in a very steep downhill slope with a fully loaded vehicle it may be decided that the service frictional braking device shall always assist the auxiliary braking device to obtain the braking action to be applied to the vehicle irrespectively of the actual speed of the vehicle.

According to another embodiment of the invention the braking control system is adapted to control braking of a vehicle having a speed indicator, said calculating means is adapted to consider information from said speed indicator about the actual speed of the vehicle and to determine that said auxiliary braking device is not able to obtain said braking action to be applied to the vehicle as soon as the speed of the vehicle is below a second predetermined speed value when driving downhill and a braking action is to be applied to the vehicle, and said braking control means is adapted to then automatically activate said service frictional braking device to assist said auxiliary braking device in braking the vehicle upon activation of said retarder brake by actuating said lever. Thus, as a safety measure it is in this way decided that if the speed of the vehicle is very low, i.e. below said second predetermined value, there is a risk that the auxiliary braking device may not be able to alone provide the braking action to be applied to the vehicle after activating said retarder brake by actuating said lever and that the service frictional braking device shall automatically be activated to assist the auxiliary braking device to obtain said braking action.

According to another embodiment of the invention the braking control system is adapted to control braking of a vehicle having an automatic or semi-automatic transmission gearbox, said calculating means is adapted to consider an order of gear shifting during downhill driving as a said driving condition of the vehicle and to calculate whether said auxiliary braking device is able to keep the speed of the vehicle at such a level that a zero torque may be obtained at a clutch of the gearbox during an intended gear shifting without any need of raising the number of revolutions of an output shaft of an engine of the vehicle above a predetermined level and to determine that said auxiliary braking device is not able to alone obtain said braking action when this is not possible. This means that it may be ensured that gear shifting may be carried out for such an automatic or semi-automatic transmission gearbox without raising the number of revolutions of an output shaft of an engine of the vehicle above a predetermined level, which would have been detrimental to parts of said engine, by simply actuating said retarder brake lever, when driving downhill.

According to another embodiment of the invention the braking control system is adapted to control braking of a motor vehicle provided with a gearbox, said calculating means is adapted to determine that said auxiliary braking device is not able to alone obtain said braking action to be applied to the vehicle during gear shifting during downhill of the vehicle. Thus, the service frictional braking device is in this embodiment always activated to assist said auxiliary braking device in braking the vehicle when a gear shifting action is to be carried out during downhill driving.

The invention also relates to a method having the features defined in claim 8 for controlling braking of a motor vehicle during downhill driving, said vehicle being provided with at least one wheel axle provided with service frictional brakes, a service frictional braking device adapted to act upon the service frictional brakes of the at least one wheel axle for obtaining a braking action, a brake pedal for activating at least the service frictional brakes of the at least one wheel axle via the service frictional braking device , and an auxiliary braking device adapted to act upon a driven wheel axle of the vehicle for obtaining a braking action and comprising a retarder brake and a lever for activating the retarder brake by hand.

The invention also relates to a computer program having the features defined in claim 15, a computer program product having the features defined in claim 22 and an electronic control unit having the features defined in claim 23.

### BRIEF DESCRIPTION OF THE DRAWINGS

The invention will in the following be more closely described by means of embodiment examples, with reference to the appended drawings, where:

Fig 1 is a schematic outline diagram illustrating a system according to the present invention,

Fig 2 is a schematic outline diagram of an electronic unit for implementing the method according to the invention, and

Fig 3 is a flow diagram illustrating a method according to an embodiment of the invention.

### EMBODIMENTS OF THE PRESENT INVENTION

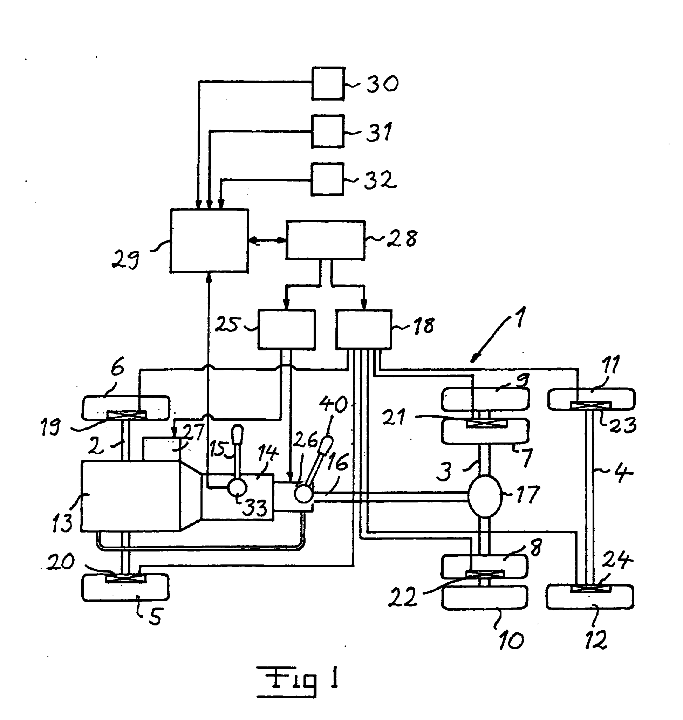

Parts of a motor vehicle 1 in the form of a truck essential for explaining the present invention are very schematically shown in Fig 1. The vehicle has a front wheel axle 2, a first rear wheel axle 3 and a second rear wheel axle 4. These axles are provided with wheels 5-12, of which the wheels 5, 6 of the front axle 2 are used for steering the vehicle, whereas the wheels 7-10 of the first rear axle 3 are used to drive the vehicle through the drive axle 3. The wheels 11, 12 of the wheel axle 4 may be lifted from the ground and are only used when the vehicle is heavily loaded.

The vehicle is further provided with an engine 13 with an output shaft (not shown) connected to a gearbox 14, which here is an automatic or semi-automatic transmission gearbox having a gear shift lever 15 for selecting different modes as Neutral, Drive, Reversing, Parking etc. The gearbox 14 has an output shaft 16 driving the wheel axle 3 through a differential 17.

The vehicle is further provided with a service frictional braking device 18 adapted to act upon all wheel axles of the vehicle for obtaining a braking action by controlling service frictional brakes 19-24 arranged in connection with at least some of the wheels always bearing on the ground when driving the vehicle.

The vehicle also comprises an auxiliary braking device 25 adapted to act upon the driven wheel axle 3 of the vehicle for obtaining a braking action by controlling a retarder brake 26 and an exhaust brake 27 schematically indicated. The retarder brake 26 is here associated with the gearbox 14 and acts on the output shaft 16 of the gearbox. In other words the retarder brake 26 here is a so-called secondary retarder, by contrast with a primary retarder, which typically is directly connected to the output shaft of the engine. A lever 40 is arranged for making it possible for the driver of the vehicle to by hand activate the retarder brake. By setting the lever 40 in a predefined position, the retarder brake is continuously activated as long as the lever is in that position although the driver has released the contact with the lever . Such a lever is normally situated on the instrument panel or the steering column of the vehicle. The exhaust brake 27 is adapted to apply a braking action upon the engine by regulating the opening degree for exhaust gases resulting from the combustion in the engine.

The vehicle further comprises a system for controlling braking of the motor vehicle 1 when driving downhill. This system comprises a braking control means 28 in the form of an electronic control unit. This braking control means is adapted to select an auxiliary braking mode under normal operation of the vehicle for saving the service brakes 19-24 to act when it is desired to obtain a braking action possible to obtain by said auxiliary braking device for reducing the speed of the vehicle or keeping it at a constant speed or reducing the speed increase thereof during downhill driving. However, the braking effect of the different brakes of the vehicle may also be manually controlled by the driver through said lever 40 and other means not shown in the form of for instance a brake pedal.

The braking control system also comprises calculating means 29 adapted to, based upon values of parameters of the driving conditions of the vehicle, calculate whether the auxiliary braking device 25 through the retarder brake 26 and the exhaust brake 27 is able to alone obtain said braking action to be applied to the vehicle when driving downhill. The braking control system according to the invention comprises a number of members adapted to deliver information about such parameters to said calculating means 29. One such member 30 is adapted to deliver information about the actual speed of the vehicle. Another member 31 is adapted to deliver information about the inclination of the vehicle, i.e. the inclination of the road on which the vehicle is driving. A still further member 32 is adapted to deliver information about the total weight of the vehicle. The braking control system also comprises a member 33 adapted to sense the position of the gear shifting lever 15 and deliver information thereabout to the calculating means 29.

The calculating means 29 is adapted to base said calculation on information about the actual speed of the vehicle received from the member 30 and information from said braking control means 28 about a value of a total braking torque corresponding to the braking action to be applied to the vehicle. This total braking torque may be determined through information from the members 30-32.

The function of the braking control system according to the invention is as follows. When driving downhill and there is a desire to apply a braking action to the vehicle, which may be determined by the driver by actuating said retarder lever 40, the calculating means considers information from the members 30-33 and calculates whether the auxiliary braking device 25 is able to alone obtain the braking action to be applied to the vehicle or not. When the answer to this question is yes the braking action is taken care of by the auxiliary braking device, i.e. the retarder brake 26 and the exhaust brake 27, alone. If the answer to the question is no, the braking control means 28 activates the service frictional braking device 18 and thereby the service brakes 19-24 for assisting the auxiliary braking device to brake the vehicle.

When a gear shifting is to be carried out and the member 31 indicates that the vehicle is driving downhill the calculating means is adapted to calculate whether the auxiliary braking device is able to alone keep the speed of the vehicle at a constant level during such gear shifting. This is done by information from the member 30 of the actual speed of the vehicle, the member 31 of the inclination of the road surface and from the member 32 of the total weight of the vehicle. That a gear shifting is going to take place is sensed by the member 33. If the calculating means determines that the auxiliary braking device will in fact be able to keep the vehicle at a substantially constant speed during such a gear shifting no braking is taking place through the service brakes. However, according to the invention said calculating means may be adapted to automatically determine that the service brakes have to be activated when the member 33 indicates that a gear shifting is going to take place and the member 31 indicates that the vehicle is driving downhill. By activating the retarder brake by actuating the lever 40 the service brakes will be activated to assist the auxiliary braking device to brake the vehicle, so that it may be ensured that the speed of the vehicle will during gear shifting be kept at a desired level, normally a constant level, irrespectively of the speed of the vehicle, the inclination of the road surface and the weight of the vehicle. This means that there will be no risk of raising the number of revolutions of the output shaft of the engine to an unacceptably high value for obtaining that a zero torque is present at gear shifting in said automatic transmission gearbox 14. Such brake blending is known as such, but not as a result of actuation of a retarder brake lever.

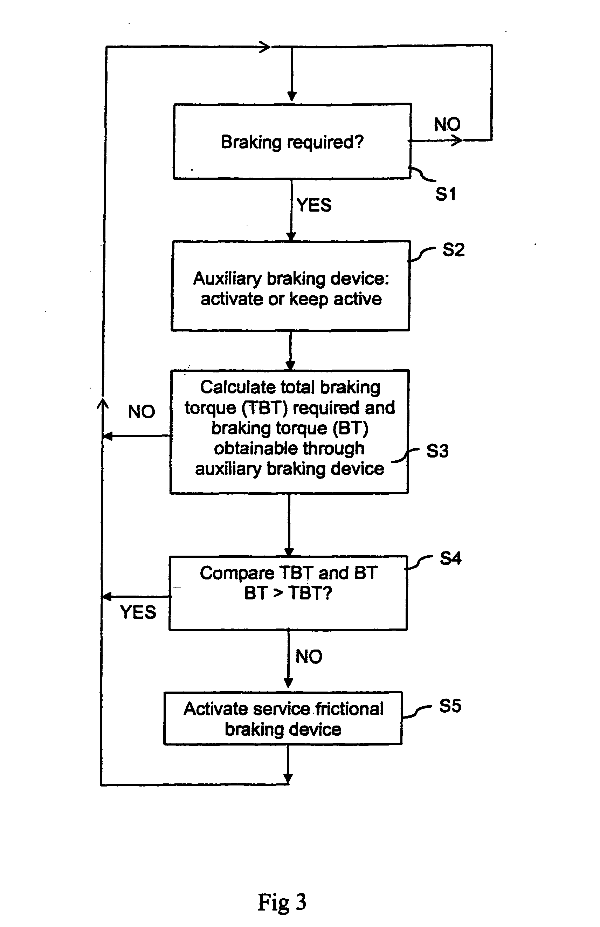

A flow diagram illustrating a method according to an embodiment of the invention is shown in Fig 3. In a first step S1, it is determined whether a braking action is required or not. When the answer to this question is yes the auxiliary braking device is in a second step S2 activated or kept active. The total braking torque required and the braking torque obtainable through the auxiliary braking device are then calculated in a step S3. Information from the members 30-33 and possibly from any member influenced by the driver of the vehicle is used for this calculation. Said total braking torque and said braking torque obtainable through the auxiliary braking device are then compared in a step S4 and the question is asked: Is the braking torque obtainable through the auxiliary braking device higher than the total braking torque required? If the answer to this question is no the service frictional braking device is, upon activating of said retarder brake lever activated in a step S5. If the answer to this question is yes it is returned to step S1. As already mentioned above it may in step S3 be automatically determined that the total braking torque required is higher than the braking torque obtainable through the auxiliary braking device if a gear shifting action is to take place and/or the speed of the vehicle is below a predetermined level and/or the combination of the inclination of the road surface and the weight of the vehicle has a certain appearance.

Computer program code for implementing a method according to the invention is suitably included in a computer program, which is loadable directly into the internal memory of a computer, such as the internal memory of a braking control unit or engine control unit of the vehicle. Such a computer program is suitably provided via a computer program product comprising a data storage medium readable by an electronic control unit, which data storage medium has the computer program stored thereon. Said data storage medium is for instance an optical data storage medium in the form of a CD-ROM disc, a DVD disc etc, a magnetic data storage medium in the form of a hard disc, a diskette, a cassette tape etc, or a memory of the type ROM, PROM, EPROM or EEPROM or a Flash memory.

The computer program according to an embodiment of the invention comprises computer program code for causing a computer, e.g. in the form of a micro processor of an electronic unit for a vehicle provided with a service frictional braking device adapted to act upon at least one wheel axle of the vehicle for obtaining a braking action and an auxiliary braking device adapted to act upon a driven wheel axle of the vehicle for obtaining a braking action and comprising a retarder brake and a lever for activating the retarder brake by the driver of the vehicle:
- to obtain an auxiliary braking mode in which the retarder brake is activated to act when it is desired to obtain a braking action possible to obtain by said auxiliary braking device,
- to obtain activation of said retarder brake by actuating said lever when a braking action is to be applied to the vehicle when driving downhill,
- to calculate, based upon values of parameters of the driving conditions of the vehicle, whether said auxiliary braking device is able to alone obtain said braking action to be applied to the vehicle, and
- to obtain activation of said service frictional braking device to assist said auxiliary braking device in braking the vehicle when the result of said calculation is that the auxiliary braking device is not able to alone obtain said braking action to be applied to the vehicle.

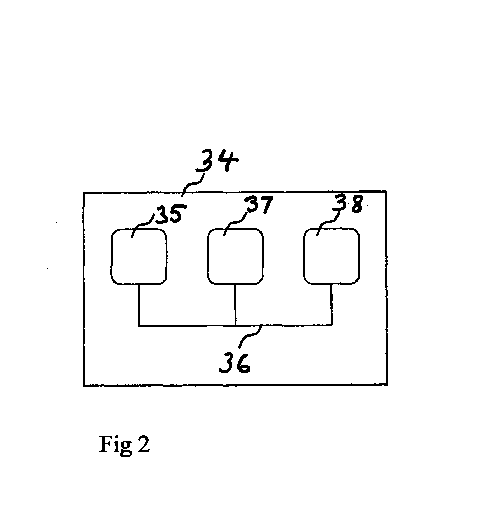

Fig 2 very schematically illustrates an electronic control unit 34 comprising an execution means 35, such as a central processing unit (CPU) for executing computer software. The execution means 35 communicates with a memory 37, for instance of the type RAM, via a data bus 36. The control unit 34 also comprises data storage medium 38, for instance in the form of a memory of the type ROM, PROM, EPROM or EEPROM or a Flash memory. The execution means communicates with the data storage medium 38 via the data bus 36. A computer program comprising computer program code for implementing a method according to the invention is stored on the data storage medium 38.

The invention is of course not in any way restricted to the embodiments described above. On the contrary, many possibilities to modifications thereof will be apparent to a person with ordinary skill in the art without departing from the basic idea of the invention as defined in the appended claims.

It is pointed out that the calculating means is preferably adapted to continuously or at very short time intervals carry out said calculation, so that the service brakes may be switched off as soon as they are not necessary any longer.

## Claims

1. A system for controlling braking of a motor vehicle during downhill driving, said vehicle being provided with:
- a gearbox (14),
- at least one wheel axle (2-4) provided with service frictional brakes (19-24),
- a service frictional braking device (18) adapted to act upon the service frictional brakes (19-24) of the at least one wheel axle (2-4) for obtaining a braking action,
- a brake pedal for activating at least the service frictional brakes (19-24) of the at least one wheel axle (2-4) via the service frictional braking device (18),
- an auxiliary braking device (25) adapted to act upon a driven wheel axle (3) of the vehicle for obtaining a braking action and comprising a retarder brake (26) and a lever (40) for activating the retarder brake by hand,
said system comprising a braking control means (28) adapted to select an auxiliary braking mode in which the retarder brake is activated to act when it is desired to obtain a braking action possible to obtain by said auxiliary braking device, said system further comprising calculating means (29) adapted to upon activation of said retarder brake (26) by actuating said lever (40) by the driver for applying a braking action to the vehicle when driving downhill, based upon values of parameters of the driving conditions of the vehicle, calculate whether said auxiliary braking device (25) is able to alone obtain said braking action to be applied to the vehicle, and that said braking control means is adapted to activate said service frictional braking device (18) to assist said auxiliary braking device in braking the vehicle when the result of the calculation of said calculating means is that the auxiliary braking device is not able to alone obtain said braking action to be applied to the vehicle. **characterized in that** said calculating means (29) is adapted to consider an order of gear shifting during downhill driving as a said driving condition of the vehicle and to calculate whether said auxiliary braking device (25) is able to keep the speed of the vehicle within a predetermined range during a gear shifting under the conditions prevailing, and that said braking control means (28) is adapted to, upon activation of said retarder brake (26) by actuating said lever, activate said service frictional braking device to assist said auxiliary braking device (18) when said calculating means determines that it will not be possible to keep the speed of the vehicle within said range by braking action from only said auxiliary braking device during a gear shifting action.

2. A system according to claim 1, in which said vehicle is provided with a speed indicator (30), **characterized** said calculating means (29) is adapted to base said calculation on information from said speed indicator about the actual speed of the vehicle and information from said braking control means about a value of a total braking torque corresponding to said braking action to be applied to the vehicle, and that said calculation means is adapted to determine that said auxiliary braking device (25) is not able to alone obtain said braking action to be applied to the vehicle if the speed of the vehicle is below a first predetermined speed value for a given value of said total braking torque.

3. A system according to claim 2, **characterized in that** said calculating means (29) is adapted to use a said first predetermined speed level which decreases when the value of said total braking torque increases.

4. A system according to any of the preceding claims, **characterized in that** said calculation means (29) is adapted to base said calculation on information from said braking control means (28) about a value of the total braking torque corresponding to said braking action to be applied to the vehicle and compare this value of total braking torque with a predetermined total braking torque threshold value and determine that the auxiliary braking device (25) is not able to alone obtain said braking action to be applied to the vehicle when said value of total braking torque exceeds said total braking torque threshold value.

5. A system according to any of the preceding claims, in which said vehicle is provided with a speed indicator (30), **characterized in that** said calculating means (29) is adapted to consider information from said speed indicator about the actual speed of the vehicle and to determine that said auxiliary braking device (25) is not able to obtain said braking action to be applied to the vehicle as soon as the speed of the vehicle is below a second predetermined speed value when driving downhill and a braking action is to be applied to the vehicle, and that said braking control means (28) is adapted to then automatically activate said service frictional braking device (18) to assist said auxiliary braking device in braking the vehicle, upon activation of said retarder brake (26) by actuating said lever.

6. A system according to claim 1, **characterized in that** said calculating means (29) is adapted to calculate whether said auxiliary braking device (25) may under the driving conditions of the vehicle prevailing be able to keep the speed of the vehicle at a substantially constant level during a gear shifting when an order is given to carry out a gear shifting during downhill driving, and that said braking control means (28) is adapted to, upon activation of said retarder brake (26) by actuating said lever for braking the vehicle for carrying out a gear shifting during downhill driving, activate said service frictional braking device (18) to assist said auxiliary braking device in braking the vehicle when said calculating means determines that said auxiliary braking device will not be able to alone keep the speed of the vehicle at a substantially constant level during said gear shifting.

7. A system according to claim 1 or 6, in which said vehicle is provided with an automatic or semi-automatic gearbox (14), **characterized in that** said calculating means (29) is adapted to consider an order of gear shifting during downhill driving as a said driving condition of the vehicle and to calculate whether said auxiliary braking device (25) is able to keep the speed of the vehicle at such a level that a zero torque may be obtained at a clutch of the gearbox during an intended gear shifting without any need of raising the number of revolutions of an output shaft of an engine of the vehicle above a predetermined level and to determine that said auxiliary braking device is not able to alone obtain said braking action when this is not possible.

8. A method for controlling braking of a motor vehicle during downhill driving, said vehicle being provided with:
- a gearbox (14),
- at least one wheel axle (2-4) provided with service frictional brakes (19-24),
- a service frictional braking device (18) adapted to act upon the service frictional brakes (19-24) of the at least one wheel axle (2-4) for obtaining a braking action,
- a brake pedal for activating at least the service frictional brakes (19-24) of the at least one wheel axle (2-4) via the service frictional braking device (18), and
- an auxiliary braking device (25) adapted to act upon a driven wheel axle (3) of the vehicle for obtaining a braking action and comprising a retarder brake (26) and a lever (40) for activating the retarder brake by hand,
the method comprising the steps of:
- selecting an auxiliary braking mode in which the retarder brake is activated to act when it is desired to obtain a braking action possible to obtain by said auxiliary braking device,
the method further comprising the steps of:
- activating said retarder brake (26) by actuating said lever when a braking action is to be applied to the vehicle when driving downhill,
- calculating, based upon values of parameters of the driving conditions of the vehicle, whether said auxiliary braking device is able to alone obtain said braking action to be applied to the vehicle, and
- automatically activating said service frictional braking device (18) to assist said auxiliary braking device in braking the vehicle when the result of said calculation is that the auxiliary braking device is not able to alone obtain said braking action to be applied to the vehicle, **characterized in that** in said calculation step an order of gear shifting during downhill driving is considered as a said driving condition of the vehicle, that it is calculated whether said auxiliary braking device (25) is able to keep the speed of the vehicle within a predetermined range during a gear shifting under the conditions prevailing, and that said service frictional braking device (18) is upon activation of said retarder brake (26) by actuating said lever activated to assist said auxiliary braking device when it is determined by said calculation that it will not be possible to keep the speed of the vehicle within said range by braking action from only said auxiliary braking device during a gear shifting action.

9. A method according to claim 8, **characterized in that** it comprises the steps of:
- measuring the speed of the vehicle,
- basing said calculation on information about the actual speed of the vehicle and information about a value of a total braking torque corresponding to said braking action to be applied to the vehicle, and
- determining that said auxiliary braking device (25) is not able to alone obtain said braking action to be applied to the vehicle if the speed of the vehicle is below a first predetermined speed value for a given value of said total braking torque.

10. A method according to claim 9, **characterized in that** in said determination step a said first predetermined speed level, which decreases when the value of said total braking torque increases, is used.

11. A method according to any of claims 8-10, **characterized in that** in said calculation step said calculation is based on information about a value of the total braking torque corresponding to said braking action to be applied to the vehicle and this value of total braking torque is compared with a predetermined total braking torque threshold value, and that it is determined that the auxiliary braking device (25) is not able to alone obtain said braking action to be applied to the vehicle when said value of total braking torque exceeds said total braking torque threshold value.

12. A method according to any of claims 8-11 **characterized in that** it comprises the step of measuring the speed of the vehicle, that in said calculation step information about the actual speed of the vehicle is considered, that it is determined that said auxiliary braking device (25) is not able to alone obtain said braking action to be applied to the vehicle as soon as the speed of the vehicle is below a second predetermined speed value when driving downhill and a braking action is to be applied to the vehicle, and that said service frictional braking device (18) is then automatically activated for assisting said auxiliary braking device in braking the vehicle upon activation of said retarder brake (26) by actuating said lever.

13. A method according to claim 8, **characterized in that** in said calculation step it is calculated whether said auxiliary braking device (25) may under the driving conditions of the vehicle prevailing be able to keep the speed of the vehicle at a substantially constant level during a gear shifting when an order is given to carry out a gear shifting during downhill driving, and that said service frictional braking device (18) is, upon activation of said retarder brake (26) by actuating said lever for braking the vehicle for carrying out a gear shifting during downhill driving, activated to assist said auxiliary braking device in braking the vehicle when it is determined through said calculation that said auxiliary braking device will not be able to alone keep the speed of the vehicle at a substantially constant level during said gear shifting.

14. A method according to claim 8 or 13, which is carried out for controlling braking of a motor vehicle provided with an automatic or semi-automatic gearbox (14), **characterized in that** in said calculation step an order of gear shifting during downhill driving is considered as a said driving condition of the vehicle, that it is calculated whether said auxiliary braking device (25) is able to keep the speed of the vehicle at such a level that a zero torque may be obtained at a clutch of the gearbox during gear shifting without any need of raising the number of revolutions of an output shaft of an engine of the vehicle above a predetermined level, and that it is determined that said auxiliary braking device is not able to alone obtain said braking action when this is not possible.

15. A computer program loadable into the internal memory of a computer in a vehicle, which computer program comprises computer program code for causing the computer, for a vehicle provided with a gearbox (14), at least one wheel axle (2-4) provided with service frictional brakes (19-24), a service frictional braking device (18) adapted to act upon the service frictional brakes (19-24) of the at least one wheel axle (2-4) for obtaining a braking action, a brake pedal for activating at least the service frictional brakes (19-24) of the at least one wheel axle (2-4) via the service frictional braking device (18), and an auxiliary braking device (25) adapted to act upon a driven wheel axle of the vehicle for obtaining a braking action and comprising a retarder brake (26) and a lever (40) for activating the retarder brake by hand:
- to obtain an auxiliary braking mode in which the retarder brake is activated to act when it is desired to obtain a braking action possible to obtain by said auxiliary braking device,
- to obtain activation of said retarder brake (26) by actuating said lever when a braking action is to be applied to the vehicle when driving downhill,
- to calculate, based upon values of parameters of the driving conditions of the vehicle, whether said auxiliary braking device is able to alone obtain said braking action to be applied to the vehicle, and
- to obtain activation of said service frictional braking device (18) to assist said auxiliary braking device (25) in braking the vehicle when the result of said calculation is that the auxiliary braking device is not able to alone obtain said braking action to be applied to the vehicle, **characterized in that** the computer program comprises computer program code for causing the computer:
- to consider an order of gear shifting during downhill driving in said calculation as a said driving condition of the vehicle,
- to calculate whether said auxiliary braking device (25) is able to keep the speed of the vehicle within a predetermined range during a gear shifting under the conditions prevailing, and
- to obtain, upon activation of said retarder brake (26) by manually actuating said lever, activation of said service frictional braking device (18) to assist said auxiliary braking device when it is determined by said calculation that it will not be possible to keep the speed value of the vehicle within said range by braking action from only said auxiliary braking device during a gear shifting action.

16. A computer program according to claim 15, **characterized in that** the computer program comprises computer program code for causing the computer:
- to obtain measurement of the speed of the vehicle,
- to base said calculation on information about the actual speed of the vehicle and information about a value of a total braking torque corresponding to said braking action to be applied to the vehicle, and
- to determine that said auxiliary braking device (25) is not able to alone obtain said braking action to be applied to the vehicle if the speed of the vehicle is below a first predetermined speed value for a given value of said total braking torque.

17. A computer program according to claim 16, **characterized in that** the computer program comprises computer program code for causing the computer:
- to use a said first predetermined speed level, which decreases when the value of said total braking torque increases, in said determination.

18. A computer program according to any of claims 15-17, **characterized in that** the computer program comprises computer program code for causing the computer:
- to base said calculation on information about a value of the total braking torque corresponding to said braking action to be applied to the vehicle,
- to compare this value of total braking torque with a predetermined total braking torque threshold value, and
- to determine that the auxiliary braking device (25) is not able to alone obtain said braking action to be applied to the vehicle when said value of total braking torque exceeds said total braking torque threshold value.

19. A computer program according to any of claims 15-18, **characterized in that** the computer program comprises computer program code for causing the computer:
- to obtain measurement of the speed of the vehicle,
- to consider information about the actual speed of the vehicle in said calculation,
- to determine that said auxiliary braking device (25) is not able to alone obtain said braking action to be applied to the vehicle as soon as the speed of the vehicle is below a second predetermined speed value when driving downhill and a braking action is to be applied to the vehicle, and
- to automatically, upon activation of said retarder brake (26) by manually actuating said lever, obtain activation of said service frictional braking device (18) for assisting said auxiliary braking device in braking the vehicle when the speed of the vehicle is below said second predetermined speed value.

20. A computer program according to claim 15, **characterized in that** the computer program comprises computer program code for causing the computer:
- to calculate whether said auxiliary braking device (25) may under the driving conditions of the vehicle prevailing be able to keep the speed of the vehicle at a substantially constant level during a gear shifting when an order is given to carry out a gear shifting during downhill driving, and
- to obtain, upon activation of said retarder brake (26) by actuating said lever for braking the vehicle for carrying out a gear shifting during downhill driving, activation of said service frictional braking device (18) to assist said auxiliary braking device in braking the vehicle when it is determined through said calculation that said auxiliary braking device will not be able to alone keep the speed of the vehicle at a substantially constant level during said gear shifting.

21. A computer program according to claim 15 or 20, **characterized in that** the computer program comprises computer program code for causing the computer, for a vehicle provided with an automatic or semi-automatic gearbox:
- to consider an order of gear shifting during downhill driving in said calculation as a said driving condition of the vehicle,
- to calculate whether said auxiliary braking device (25) is able to keep the speed of the vehicle at such a level that a zero torque may be obtained at a clutch of the gearbox during gear shifting without any need of raising the number of revolutions of an output shaft of an engine of the vehicle above a predetermined level, and
- to determine that said auxiliary braking device is not able to alone obtain said braking action when this is not possible.

22. A computer program product comprising a data storage medium readable by an electronic unit, a computer program according to any of claims 15-21 being stored on said data storage medium.

23. An electronic unit comprising an execution means, a memory connected to the execution means and a data storage medium connected to the execution means, a computer program according to any of claims 15-21 being stored on said data storage medium.

## Patentansprüche

1. System zur Bremssteuerung eines Kraftfahrzeugs bei einem Bergabfahren, wobei das Fahrzeug versehen ist mit:
- einem Getriebe (14),
- wenigstens einer Radachse (2-4), die mit Betriebsreibungsbremsen (19-24) versehen ist,
- einer Betriebsreibungsbremsenvorrichtung (18), die dazu eingerichtet ist, auf die Betriebsreibungsbremsen (19-24) der wenigstens einen Radachse (2-4) einzuwirken, um eine Bremsung zu erzielen,
- ein Bremspedal zum Aktivieren zumindest der Betriebsreibungsbremsen (19-24) der wenigstens einen Radachse (2-4) mittels der Betriebsreibungsbremsenvorrichtung (18),
- eine Hilfsbremsvorrichtung (25), die dazu eingerichtet ist, auf eine angetriebene Radachse (3) des Fahrzeugs einzuwirken, um eine Bremsung zu erzielen, und die eine Dauerbremse (26) umfasst und einen Hebel (40) zum Aktivieren der Dauerbremse per Hand,
wobei das System ein Bremssteuermittel (28) umfasst, das dazu eingerichtet ist, einen Hilfsbremsmodus auszuwählen, in welchem die Dauerbremse für ein Einwirken aktiviert ist, wenn es erwünscht ist, eine Bremsung zu erzielen, die mittels der Hilfsbremsvorrichtung erzielt werden kann, wobei das System weiterhin umfasst ein Berechnungsmittel (29), das dazu eingerichtet ist, bei einer Aktivierung der Dauerbremse (26) durch Betätigen des Hebels (40) durch den Fahrer zum Ausüben einer Bremsung auf das Fahrzeug bei einem Bergabfahren, basierend auf Parameterwerten der Fahrzustände des Fahrzeugs zu berechnen, ob die Hilfsbremsvorrichtung (25) in der Lage ist, die auf das Fahrzeug auszuübende Bremsung allein zu erzielen, wobei das Bremssteuermittel dazu eingerichtet ist, die Betriebsreibungsbremsenvorrichtung (18) für ein Unterstützen der Hilfsbremsvorrichtung beim Bremsen des Fahrzeugs zu aktivieren, wenn das Resultat des Berechnens des Berechnungsmittels ist, dass die Hilfsbremsvorrichtung nicht in der Lage ist, die auf das Fahrzeug auszuübende Bremsung allein zu erzielen,
**dadurch gekennzeichnet, dass** das Berechnungsmittel (29) dazu eingerichtet ist, eine Größenordnung eines Gangwechsels bei dem Bergabfahren als einen Fahrzustand des Fahrzeugs zu berücksichtigen, und zu berechnen, ob die Hilfsbremsvorrichtung (25) in der Lage ist, die Geschwindigkeit des Fahrzeugs während eines Gangwechsels bei den vorliegenden Zuständen innerhalb eines vorbestimmten Bereichs zu halten, und dass das Bremssteuermittel (28) dazu eingerichtet ist, beim Aktivieren der Dauerbremse (26) durch Betätigen des Hebels die Betriebsreibungsbremsenvorrichtung für ein Unterstützen der Hilfsbremsvorrichtung (18) zu aktivieren, wenn das Berechnungsmittel ermittelt, dass es nicht möglich sein wird, bei einem Gangwechselvorgang die Geschwindigkeit des Fahrzeugs mittels einer Bremsung von ausschließlich der Hilfsbremsvorrichtung innerhalb des Bereichs zu halten.

2. System nach Anspruch 1,
wobei das Fahrzeug mit einem Geschwindigkeitsmessgerät (30) versehen ist, **dadurch gekennzeichnet, dass** das Berechnungsmittel (29) dazu eingerichtet ist, das Berechnen auf Informationen des Geschwindigkeitsmessgeräts bezüglich der tatsächlichen Geschwindigkeit des Fahrzeugs und Informationen des Bremssteuermittels bezüglich eines Werts eines Gesamtbremsmoments zu stützen, welches der auf das Fahrzeug auszuübenden Bremsung entspricht, und dass das Berechnungsmittel dazu eingerichtet ist, zu ermitteln, dass die Hilfsbremsvorrichtung (25) nicht in der Lage ist, die auf das Fahrzeug auszuübende Bremsung allein zu erzielen, wenn die Geschwindigkeit des Fahrzeugs unterhalb eines ersten vorbestimmen Geschwindigkeitswertes für einen gegebenen Wert des Gesamtbremsmoments liegt.

3. System nach Anspruch 2,
**dadurch gekennzeichnet, dass** das Berechnungsmittel (29) dazu eingerichtet ist, ein erstes vorbestimmtes Geschwindigkeitsniveau zu verwenden, welches abnimmt, wenn der Wert des Gesamtbremsmoments zunimmt.

4. System nach einem der vorangehenden Ansprüche,
**dadurch gekennzeichnet, dass** das Berechnungsmittel (29) dazu eingerichtet ist, das Berechnen auf Informationen des Bremssteuermittels (28) bezüglich eines Werts des Gesamtbremsmoments zu stützen, welches der auf das Fahrzeug auszuübenden Bremsung entspricht, und diesen Wert des Gesamtbremsmoments mit einem vorbestimmten Gesamtbremsmomentschwellenwert zu vergleichen, und zu ermitteln, dass die Hilfsbremsvorrichtung (25) nicht in der Lage ist, die auf das Fahrzeug auszuübende Bremsung allein zu erzielen, wenn der Wert des Gesamtbremsmoments den Gesamtbremsmomentschwellenwert überschreitet.

5. System nach einem der vorangehenden Ansprüche,
wobei das Fahrzeug mit einem Geschwindigkeitsmessgerät (30) versehen ist, **dadurch gekennzeichnet, dass** das Berechnungsmittel (29) dazu eingerichtet ist, Informationen des Geschwindigkeitsmessgeräts bezüglich der tatsächlichen Geschwindigkeit des Fahrzeugs zu berücksichtigen, und zu ermitteln, dass die Hilfsbremsvorrichtung (25) nicht in der Lage ist, die auf das Fahrzeug auszuübende Bremsung zu erzielen, sobald die Geschwindigkeit des Fahrzeugs unterhalb eines zweiten vorbestimmten Geschwindigkeitswertes bei einem Bergabfahren liegt und eine Bremsung auf das Fahrzeug auszuüben ist, und dass das Bremssteuermittel (28) dazu eingerichtet ist, bei einem Aktivieren der Dauerbremse durch Betätigen des Hebels dann automatisch die Betriebsreibungsbremsenvorrichtung (18) für ein Unterstützen der Hilfsbremsvorrichtung beim Bremsen des Fahrzeugs zu aktivieren.

6. System nach Anspruch 1,
**dadurch gekennzeichnet, dass** das Berechnungsmittel (29) dazu eingerichtet ist, zu berechnen, ob die Hilfsbremsvorrichtung (25) bei den vorliegenden Fahrzuständen des Fahrzeugs in der Lage sein kann, die Geschwindigkeit des Fahrzeugs auf einem im Wesentlichen konstanten Niveau während eines Gangwechsels zu halten, wenn ein Befehl zum Ausführen eines Gangwechsels während eines Bergabfahrens vorliegt, und dass das Bremssteuermittel (28) dazu eingerichtet ist, beim Aktivieren der Dauerbremse (26) durch Betätigen des Hebels zum Bremsen des Fahrzeugs für das Ausführen eines Gangwechselns während einem Bergabfahren, die Betriebsreibungsbremsenvorrichtung (18) für ein Unterstützen der Hilfsbremsvorrichtung beim Bremsen des Fahrzeugs zu aktivieren, wenn das Berechnungsmittel ermittelt, dass die Hilfsbremsvorrichtung nicht alleine in der Lage sein wird, die Geschwindigkeit des Fahrzeugs während des Gangwechsels auf einem im Wesentlichen konstanten Niveau zu halten.

7. System nach Anspruch 1 oder 6,
wobei das Fahrzeug mit einem automatischen oder halbautomatischen Getriebe (14) versehen ist,
**dadurch gekennzeichnet, dass** das Berechnungsmittel (29) dazu eingerichtet ist, eine Größenordnung des Gangwechsels bei einem Bergabfahren als einen Fahrzustand des Fahrzeugs zu berücksichtigen, und zu berechnen, ob die Hilfsbremsvorrichtung (25) in der Lage ist, die Geschwindigkeit des Fahrzeugs auf einem derartigen Niveau zu halten, dass ein Nullmoment an einer Kupplung des Getriebes während eines beabsichtigten Gangwechsels erzielt werden kann, ohne jegliche Notwendigkeit des Erhöhens der Anzahl an Umdrehungen einer Ausgangswelle eines Motors des Fahrzeugs über ein vorbestimmtes Niveau, und zu ermitteln, dass die Hilfsbremsvorrichtung nicht in der Lage ist, die Bremsung allein zu erzielen, wenn dies nicht möglich ist.

8. Verfahren zur Bremssteuerung eines Kraftfahrzeugs bei einem Bergabfahren, wobei das Fahrzeug versehen ist mit:
- einem Getriebe (14),
- wenigstens einer Radachse (2-4), die mit Betriebsreibungsbremsen (19-24) versehen ist,
- einer Betriebsreibungsbremsenvorrichtung (18), die dazu eingerichtet ist, auf die Betriebsreibungsbremsen (19-24) der wenigstens einen Radachse (2-4) einzuwirken, um eine Bremsung zu erzielen,
- ein Bremspedal zum Aktivieren zumindest der Betriebsreibungsbremsen (19-24) der wenigstens einen Radachse (2-4) mittels der Betriebsreibungsbremsenvorrichtung (18), und
- eine Hilfsbremsvorrichtung (25), die dazu eingerichtet ist, auf eine angetriebene Radachse (3) des Fahrzeugs einzuwirken, um eine Bremsung zu erzielen, und die eine Dauerbremse (26) umfasst und einen Hebel (40) zum Aktivieren der Dauerbremse per Hand,
wobei das Verfahren die folgenden Schritte umfasst:
- Auswählen eines Hilfsbremsmodus, in welchem die Dauerbremse für ein Einwirken aktiviert ist, wenn es erwünscht ist, eine Bremsung zu erzielen, die mittels der Hilfsbremsvorrichtung erzielt werden kann,
das Verfahren umfasst weiterhin die Schritte:
- Aktivieren der Dauerbremse (26) durch Betätigen des Hebels zum Ausüben einer Bremsung auf das Fahrzeug bei einem Bergabfahren,
- Berechnen, basierend auf Parameterwerten der Fahrzustände des Fahrzeugs, ob die Hilfsbremsvorrichtung in der Lage ist, die auf das Fahrzeug auszuübende Bremsung allein zu erzielen, und
- automatisches Aktivieren der Betriebsreibungsbremsenvorrichtung (18) für ein Unterstützen der Hilfsbremsvorrichtung beim Bremsen des Fahrzeugs, wenn das Resultat des Berechnens ist, dass die Hilfsbremsvorrichtung nicht in der Lage ist, die auf das Fahrzeug auszuübende Bremsung allein zu erzielen,
**dadurch gekennzeichnet, dass** bei dem Schritt des Berechnens eine Größenordnung eines Gangwechsels bei einem Bergabfahren als ein Fahrzustand des Fahrzeugs berücksichtigt wird, das berechnet wird, ob die Hilfsbremsvorrichtung (25) in der Lage ist, die Geschwindigkeit des Fahrzeugs während eines Gangwechsels bei den vorliegenden Zuständen innerhalb eines vorbestimmten Bereichs zu halten, und dass bei einem Aktivieren der Dauerbremse (26) durch Betätigen des Hebels die Betriebsreibungsbremsenvorrichtung für ein Unterstützen der Hilfsbremsvorrichtung (18) aktiviert wird, wenn durch das Berechnen ermittelt wird, dass es nicht möglich sein wird, bei einem Gangwechselvorgang die Geschwindigkeit des Fahrzeugs mittels einer Bremsung von ausschließlich der Hilfsbremsvorrichtung innerhalb des Bereichs zu halten.

9. Verfahren nach Anspruch 8,
**dadurch gekennzeichnet, dass** es die folgenden Schritte umfasst:
- Messen der Geschwindigkeit des Fahrzeugs,
- Stützen des Berechnens auf Informationen bezüglich der tatsächlichen Geschwindigkeit des Fahrzeugs und Informationen bezüglich eines Werts eines Gesamtbremsmoments, welches der auf das Fahrzeug auszuübenden Bremsung entspricht, und
- Ermitteln, dass die Hilfsbremsvorrichtung (25) nicht in der Lage ist, die auf das Fahrzeug auszuübende Bremsung allein zu erzielen, wenn die Geschwindigkeit des Fahrzeugs unterhalb eines ersten vorbestimmen Geschwindigkeitswertes für einen gegebenen Wert des Gesamtbremsmoments liegt.

10. Verfahren nach Anspruch 9,
**dadurch gekennzeichnet, dass** beim Schritt des Ermittelns ein erstes vorbestimmtes Geschwindigkeitsniveau verwendet wird, welches abnimmt, wenn der Wert des Gesamtbremsmoments zunimmt.

11. Verfahren nach einem der Ansprüche 8 bis 10,
**dadurch gekennzeichnet, dass** beim Schritt des Berechnens das Berechnen auf Informationen bezüglich eines Werts des Gesamtbremsmoments basiert, welches der auf das Fahrzeug auszuübenden Bremsung entspricht, und dieser Wert des Gesamtbremsmoments mit einem vorbestimmten Gesamtbremsmomentschwellenwert verglichen wird, und dass ermittelt wird, dass die Hilfsbremsvorrichtung (25) nicht in der Lage ist, die auf das Fahrzeug auszuübende Bremsung allein zu erzielen, wenn der Wert des Gesamtbremsmoments den Gesamtbremsmomentschwellenwert überschreitet.

12. Verfahren nach einem der Ansprüche 8 bis 11,
**dadurch gekennzeichnet, dass** es den Schritt des Messens der Geschwindigkeit des Fahrzeugs umfasst, dass beim Schritt des Berechnens Informationen bezüglich der tatsächlichen Geschwindigkeit des Fahrzeugs berücksichtigt werden, dass ermittelt wird, dass die Hilfsbremsvorrichtung (25) nicht in der Lage ist, die auf das Fahrzeug auszuübende Bremsung allein zu erzielen, sobald die Geschwindigkeit des Fahrzeugs unterhalb eines zweiten vorbestimmten Geschwindigkeitswertes bei einem Bergabfahren liegt und eine Bremsung auf das Fahrzeug auszuüben ist, und dass bei einem Aktivieren der Dauerbremse (26) durch Betätigen des Hebels dann automatisch die Betriebsreibungsbremsenvorrichtung (18) für ein Unterstützen der Hilfsbremsvorrichtung beim Bremsen des Fahrzeugs aktiviert wird.

13. Verfahren nach Anspruch 8,
**dadurch gekennzeichnet, dass** beim Schritt des Berechnens berechnet wird, ob die Hilfsbremsvorrichtung (25) bei den vorliegenden Fahrzuständen des Fahrzeugs in der Lage sein kann, die Geschwindigkeit des Fahrzeugs auf einem im Wesentlichen konstanten Niveau während eines Gangwechsels zu halten, wenn ein Befehl zum Ausführen eines Gangwechsels während eines Bergabfahrens vorliegt, und dass beim Aktivieren der Dauerbremse (26) durch Betätigen des Hebels zum Bremsen des Fahrzeugs für das Ausführen eines Gangwechselns während einem Bergabfahren, die Betriebsreibungsbremsenvorrichtung (18) für ein Unterstützen der Hilfsbremsvorrichtung beim Bremsen des Fahrzeugs aktiviert wird, wenn durch das Berechnen ermittelt wird, dass die Hilfsbremsvorrichtung nicht alleine in der Lage sein wird, die Geschwindigkeit des Fahrzeugs während des Gangwechsels auf einem im Wesentlichen konstanten Niveau zu halten.

14. Verfahren nach Anspruch 8 oder 13,
welches für eine Bremssteuerung eines mit einem automatischen oder halbautomatischen Getriebe (14) versehenen Fahrzeugs ausgeführt wird,
**dadurch gekennzeichnet, dass** beim Schritt des Berechnens eine Größenordnung des Gangwechsels bei einem Bergabfahren als ein Fahrzustand des Fahrzeugs berücksichtigt wird, dass berechnet wird, ob die Hilfsbremsvorrichtung (25) in der Lage ist, die Geschwindigkeit des Fahrzeugs auf einem derartigen Niveau zu halten, dass ein Nullmoment an einer Kupplung des Getriebes während eines beabsichtigten Gangwechsels erzielt werden kann, ohne jegliche Notwendigkeit des Erhöhens der Anzahl an Umdrehungen einer Ausgangswelle eines Motors des Fahrzeugs über ein vorbestimmtes Niveau, und dass ermittelt wird, dass die Hilfsbremsvorrichtung nicht in der Lage ist, die Bremsung allein zu erzielen, wenn dies nicht möglich ist.

15. Computerprogrammprodukt,
das in den internen Speicher eines Computers in einem Fahrzeug ladbar ist, wobei das Computerprogramm Computerprogrammcode umfasst, um den Computer zu veranlassen, für ein Fahrzeug, das mit einem Getriebe (14) versehen ist, wenigstens einer Radachse (2-4), die mit Betriebsreibungsbremsen (19-24) versehen ist, einer Betriebsreibungsbremsenvorrichtung (18), die dazu eingerichtet ist, auf die Betriebsreibungsbremsen (19-24) der wenigstens einen Radachse (2-4) einzuwirken, um eine Bremsung zu erzielen, einem Bremspedal zum Aktivieren zumindest der Betriebsreibungsbremsen (19-24) der wenigstens einen Radachse (2-4) mittels der Betriebsreibungsbremsenvorrichtung (18), einer Hilfsbremsvorrichtung (25), die dazu eingerichtet ist, auf eine angetriebene Radachse (3) des Fahrzeugs einzuwirken, um eine Bremsung zu erzielen, und die eine Dauerbremse (26) umfasst und einen Hebel (40) zum Aktivieren der Dauerbremse per Hand:
- einen Hilfsbremsmodus zu erzielen, in welchem die Dauerbremse für ein Einwirken aktiviert ist, wenn es erwünscht ist, eine Bremsung zu erzielen, die mittels der Hilfsbremsvorrichtung erzielt werden kann,
- ein Aktivieren der Dauerbremse (26) durch Betätigen des Hebels zu erzielen, wenn eine Bremsung auf das Fahrzeug bei einem Bergabfahren auszuüben ist,
- basierend auf Parameterwerten der Fahrzustände des Fahrzeugs zu berechnen, ob die Hilfsbremsvorrichtung in der Lage ist, die auf das Fahrzeug auszuübende Bremsung allein zu erzielen, und
- ein Aktivieren der Betriebsreibungsbremsenvorrichtung (18) für ein Unterstützen der Hilfsbremsvorrichtung (25) beim Bremsen des Fahrzeugs zu erzielen, wenn das Resultat des Berechnens ist, dass die Hilfsbremsvorrichtung nicht in der Lage ist, die auf das Fahrzeug auszuübende Bremsung allein zu erzielen,
**dadurch gekennzeichnet, dass** das Computerprogramm Computerprogrammcode umfasst, um den Computer zu veranlassen:
- eine Größenordnung eines Gangwechsels bei dem Bergabfahren als einen Fahrzustand des Fahrzeugs bei dem Berechnen zu berücksichtigen
- zu berechnen, ob die Hilfsbremsvorrichtung (25) in der Lage ist, die Geschwindigkeit des Fahrzeugs während eines Gangwechsels bei den vorliegenden Bedingungen innerhalb eines vorbestimmten Bereichs zu halten, und
- bei einem Aktivieren der Dauerbremse (26) durch manuelles Betätigen des Hebels ein Aktivieren der Betriebsreibungsbremsenvorrichtung (18) für ein Unterstützen der Hilfsbremsvorrichtung zu erzielen, wenn durch das Berechnen ermittelt wird, dass es nicht möglich sein wird, bei einem Gangwechselvorgang die Geschwindigkeit des Fahrzeugs mittels einer Bremsung von ausschließlich der Hilfsbremsvorrichtung innerhalb des Bereichs zu halten.

16. Computerprogrammprodukt nach Anspruch 15,
**dadurch gekennzeichnet, dass** das Computerprogramm Computerprogrammcode umfasst, um den Computer zu veranlassen:
- ein Messen der Geschwindigkeit des Fahrzeugs zu erzielen,
- das Berechnen auf Informationen bezüglich der tatsächlichen Geschwindigkeit des Fahrzeugs zu basieren und Informationen bezüglich eines Werts eines Gesamtbremsmoments, welches der auf das Fahrzeug auszuübenden Bremsung entspricht, und
- zu ermitteln, dass die Hilfsbremsvorrichtung (25) nicht in der Lage ist, die auf das Fahrzeug auszuübende Bremsung allein zu erzielen, wenn die Geschwindigkeit des Fahrzeugs unterhalb eines ersten vorbestimmen Geschwindigkeitswertes für einen gegebenen Wert des Gesamtbremsmoments liegt.

17. Computerprogrammprodukt nach Anspruch 16,
**dadurch gekennzeichnet, dass** das Computerprogramm Computerprogrammcode umfasst, um den Computer zu veranlassen:
- bei dem Ermitteln ein erstes vorbestimmtes Geschwindigkeitsniveau zu verwenden, welches abnimmt, wenn der Wert des Gesamtbremsmoments zunimmt.

18. Computerprogrammprodukt nach Anspruch 15 bis 17,
**dadurch gekennzeichnet, dass** das Computerprogramm Computerprogrammcode umfasst, um den Computer zu veranlassen:
- das Berechnen auf Informationen bezüglich eines Werts des Gesamtbremsmoments zu basieren, welches der auf das Fahrzeug auszuübenden Bremsung entspricht,
- diesen Wert des Gesamtbremsmoments mit einem vorbestimmten Gesamtbremsmomentschwellenwert zu vergleichen, und
- zu ermitteln, dass die Hilfsbremsvorrichtung (25) nicht in der Lage ist, die auf das Fahrzeug auszuübende Bremsung allein zu erzielen, wenn der Wert des Gesamtbremsmoments den Gesamtbremsmomentschwellenwert überschreitet.

19. Computerprogrammprodukt nach Anspruch 15 bis 18,
**dadurch gekennzeichnet, dass** das Computerprogramm Computerprogrammcode umfasst, um den Computer zu veranlassen:
- ein Messen der Geschwindigkeit des Fahrzeugs zu erzielen,
- Informationen bezüglich der tatsächlichen Geschwindigkeit des Fahrzeugs beim Berechnen zu berücksichtigen,
- zu ermitteln, dass die Hilfsbremsvorrichtung (25) nicht in der Lage ist, die auf das Fahrzeug auszuübende Bremsung allein zu erzielen, sobald die Geschwindigkeit des Fahrzeugs unterhalb eines zweiten vorbestimmten Geschwindigkeitswertes bei einem Bergabfahren liegt und eine Bremsung auf das Fahrzeug auszuüben ist, und
- bei einem Aktivieren der Dauerbremse (26) durch manuelles Betätigen des Hebels automatisch ein Aktivieren der Betriebsreibungsbremsenvorrichtung für ein Unterstützen der Hilfsbremsvorrichtung beim Bremsen des Fahrzeugs zu erzielen, wenn die Geschwindigkeit des Fahrzeugs unterhalb des zweiten vorbestimmten Geschwindigkeitswertes liegt.

20. Computerprogrammprodukt nach Anspruch 15,
**dadurch gekennzeichnet, dass** das Computerprogramm Computerprogrammcode umfasst, um den Computer zu veranlassen:
- zu berechnen, ob die Hilfsbremsvorrichtung (25) bei den vorliegenden Fahrzuständen des Fahrzeugs in der Lage sein kann, die Geschwindigkeit des Fahrzeugs auf einem im Wesentlichen konstanten Niveau während eines Gangwechsels zu halten, wenn ein Befehl zum Ausführen eines Gangwechsels während eines Bergabfahrens vorliegt, und
- beim Aktivieren der Dauerbremse (26) durch Betätigen des Hebels zum Bremsen des Fahrzeugs für das Ausführen eines Gangwechselns während einem Bergabfahren, ein Aktivieren der Betriebsreibungsbremsenvorrichtung (18) für ein Unterstützen der Hilfsbremsvorrichtung beim Bremsen des Fahrzeugs zu erzielen, wenn durch das Berechnen ermittelt wird, dass die Hilfsbremsvorrichtung nicht alleine in der Lage sein wird, die Geschwindigkeit des Fahrzeugs während des Gangwechsels auf einem im Wesentlichen konstanten Niveau zu halten.

21. Computerprogrammprodukt nach Anspruch 15 oder 20,
**dadurch gekennzeichnet, dass** das Computerprogramm Computerprogrammcode umfasst, um den Computer für eine Bremssteuerung eines mit einem automatischen oder halbautomatischen Getriebe versehenen Fahrzeugs zu veranlassen:
- eine Größenordnung des Gangwechsels bei einem Bergabfahren als ein Fahrzustand des Fahrzeugs bei dem Berechnen zu berücksichtigen,
- zu berechnen, ob die Hilfsbremsvorrichtung (25) in der Lage ist, die Geschwindigkeit des Fahrzeugs auf einem derartigen Niveau zu halten, dass ein Nullmoment an einer Kupplung des Getriebes während eines Gangwechsels erzielt werden kann, ohne jegliche Notwendigkeit des Erhöhens der Anzahl an Umdrehungen einer Ausgangswelle eines Motors des Fahrzeugs über ein vorbestimmtes Niveau, und
- zu ermitteln, dass die Hilfsbremsvorrichtung nicht in der Lage ist, die Bremsung allein zu erzielen, wenn dies nicht möglich ist.

22. Computerprogrammprodukt,
das ein von einer elektronischen Einheit lesbares Datenspeichermedium umfasst, wobei ein Computerprogramm nach einem der Ansprüche 15 bis 21 auf dem Datenspeichermedium gespeichert ist.

23. Elektronische Einheit,
die ein Ausführungsmittel umfasst, einen an das Ausführungsmittel angeschlossenen Speicher und ein an das Ausführungsmittel angeschlossenes Datenspeichermedium, wobei ein Computerprogramm nach einem der Ansprüche 15 bis 21 auf dem Datenspeichermedium gespeichert ist.

## Revendications

1. Système pour commander le freinage d'un véhicule automobile pendant la conduite en descente, ledit véhicule comprenant :
- une boîte de vitesses (14),
- au moins un essieu (2-4) équipé de freins de service à friction (19-24),
- un dispositif de freinage de service à friction (18) apte à agir sur les freins de service à friction (19-24) de l'au moins un essieu (2-4) pour obtenir une action de freinage,
- une pédale de frein servant à activer au moins les freins de service à friction (19-24) de l'au moins un essieu (2-4) par l'intermédiaire du dispositif de freinage de service à friction (18),
- un dispositif de freinage auxiliaire (25) apte à agir sur un essieu moteur (3) du véhicule pour obtenir une action de freinage et comprenant un frein ralentisseur (26) et un levier (40) servant à activer le frein ralentisseur à la main,
ledit système comprenant un moyen de commande de freinage (28) apte à sélectionner un mode de freinage auxiliaire dans lequel le frein ralentisseur est activé pour agir lorsqu'il est souhaité d'obtenir une action de freinage qu'il est possible d'obtenir au moyen dudit dispositif de freinage auxiliaire, ledit système comprenant en outre un moyen de calcul (29) qui, à la suite de l'activation dudit frein ralentisseur (26) exécutée par actionnement dudit levier (40) par le conducteur pour appliquer une action de freinage au véhicule pendant la conduite en descente, est apte à calculer, sur la base de valeurs de paramètres des conditions de conduite du véhicule, si ledit dispositif de freinage auxiliaire (25) est capable à lui seul d'obtenir ladite action de freinage qui doit être appliquée au véhicule, et que ledit moyen de commande de freinage est apte à activer ledit dispositif de freinage de service à friction (18) pour assister ledit dispositif de freinage auxiliaire dans le freinage du véhicule lorsque le résultat du calcul dudit moyen de calcul est que le dispositif de freinage auxiliaire n'est pas capable à lui seul d'obtenir ladite action de freinage qui doit être appliquée au véhicule, **caractérisé en ce que** ledit moyen de calcul (29) est apte à considérer un ordre de changement de rapport pendant la conduite en descente comme une desdites conditions de conduite du véhicule et à calculer si ledit dispositif de freinage auxiliaire (25) est capable de maintenir la vitesse du véhicule dans une plage prédéterminée pendant un changement de rapport dans les conditions existantes, et **en ce que** ledit moyen de commande du freinage (28) est apte, à la suite de l'activation dudit frein ralentisseur (26) exécutée par l'actionnement dudit levier, à activer ledit dispositif de freinage de service à friction pour assister ledit dispositif de freinage auxiliaire (18) lorsque ledit moyen de calcul détermine qu'il ne sera pas possible de maintenir la vitesse du véhicule dans ladite plage par une action de freinage exécutée seulement par ledit dispositif de freinage auxiliaire pendant une action de changement de rapport.

2. Système selon la revendication 1, dans lequel le dit véhicule est équipé d'un indicateur de vitesse (30), **caractérisé en ce que** ledit moyen de calcul (29) est apte à baser ledit calcul sur une information dudit indicateur de vitesse relative à la vitesse réelle du véhicule et sur une information provenant dudit moyen de commande de freinage et relative à une valeur d'un couple de freinage total correspondant à ladite action de freinage qui doit être appliquée au véhicule, et **en ce que** ledit moyen de calcul est apte à déterminer que ledit dispositif de freinage auxiliaire (25) n'est pas capable à lui seul d'obtenir ladite action de freinage qui doit être appliquée au véhicule si la vitesse du véhicule est au-dessous d'une première valeur de vitesse prédéterminée pour une valeur donnée dudit couple de freinage total.

3. Système selon la revendication 2, **caractérisée en ce que** ledit moyen de calcul (29) est apte à utiliser un premier niveau de vitesse prédéterminé qui décroît lorsque la valeur dudit couple de freinage total croît.

4. Système selon une quelconque des revendications précédentes, **caractérisé en ce que** ledit moyen de calcul (29) est apte à baser ledit calcul sur une information provenant dudit moyen de commande de freinage (28) et relative à une valeur du couple de freinage total qui correspond à ladite action de freinage qui doit être appliquée au véhicule, à comparer cette valeur du couple de freinage total à une valeur seuil prédéterminée du couple de freinage total et à déterminer que ledit dispositif de freinage auxiliaire (25) n'est pas capable à lui seul d'obtenir ladite action de freinage qui doit être appliquée au véhicule lorsque ladite valeur de couple de freinage total est supérieure à ladite valeur seuil du couple de freinage total.

5. Système selon une quelconque des revendications précédentes, dans lequel ledit véhicule est équipé d'un indicateur de vitesse (30), **caractérisé en ce que** ledit moyen de calcul (29) est apte à prendre en considération une information en provenance dudit indicateur de vitesse et relative à la vitesse réelle du véhicule, et à déterminer que ledit dispositif de freinage auxiliaire (25) n'est pas capable d'obtenir ladite action de freinage qui doit être appliquée au véhicule dès que la vitesse du véhicule est au-dessous d'une seconde valeur de vitesse prédéterminée pendant la conduite en descente et qu'une action de freinage doit être appliquée au véhicule, et que ledit moyen de commande de freinage (28) est apte à activer automatiquement à ce moment ledit dispositif de freinage de service à friction (18) pour assister ledit dispositif de freinage auxiliaire dans le freinage du véhicule, à la suite de l'activation dudit frein ralentisseur (26) exécutée par actionnement dudit levier.

6. Système selon la revendication 1, **caractérisé en ce que** ledit moyen de calcul (29) est apte à calculer si ledit dispositif de freinage auxiliaire (25) peut être capable, dans les conditions existantes de conduite du véhicule, de maintenir la vitesse du véhicule à un niveau sensiblement constant pendant un changement de rapport lorsqu'un ordre est donné d'exécuter un changement de rapport pendant la conduite en descente, et **en ce que** ledit moyen de commande de freinage (28) est apte, à la suite de l'activation dudit frein ralentisseur (26) exécutée par actionnement dudit levier pour freiner le véhicule pour exécuter un changement de rapport pendant la conduite en descente, à activer ledit dispositif de freinage de service à friction (18) afin d'assister ledit dispositif de freinage auxiliaire dans le freinage du véhicule lorsque ledit moyen de calcul détermine que ledit dispositif de freinage auxiliaire ne sera pas capable à lui seul de maintenir la vitesse du véhicule à un niveau sensiblement constant pendant ledit changement de rapport.

7. Système selon la revendication 1 ou 6, dans lequel ledit véhicule est équipé d'une boîte de vitesses automatique ou semi-automatique (14), **caractérisé en ce que** ledit moyen de calcul (29) est apte à considérer un ordre de changement de rapport pendant une conduite en descente comme une desdites conditions de conduite du véhicule, à calculer si ledit dispositif de freinage auxiliaire (25) est capable de maintenir la vitesse du véhicule à un niveau tel qu'un couple zéro puisse être obtenu sur un embrayage de la boîte de vitesses pendant un changement de vitesse envisagé sans aucune nécessité d'élever le nombre de tours d'un arbre de sortie d'un moteur du véhicule au-dessus d'un niveau prédéterminé, et à déterminer que ledit dispositif de freinage auxiliaire n'est pas capable à lui seul d'obtenir ladite action de freinage lorsque ceci n'est pas possible.

8. Procédé pour commander le freinage véhicule automobile pendant la conduite en descente, ledit véhicule comprenant :
- une boîte de vitesses (14)
- au moins un essieu (2-4) équipé de freins de service à friction (19-24),
- un dispositif de freinage de service à friction (18) apte à agir sur les freins de service à friction (19-24) de l'au moins un essieu (2-4) pour obtenir une action de freinage,
- une pédale de frein servant à activer au moins les freins de service à friction (19-24) de l'au moins un essieu (2-4) par l'intermédiaire du dispositif de freinage de service à friction (18), et
- un dispositif de freinage auxiliaire (25) apte à agir sur un essieu moteur (3) du véhicule pour obtenir une action de freinage et comprenant un frein ralentisseur (26) et un levier (40) servant à activer le frein ralentisseur à la main,
le procédé comprenant les étapes consistant à :
- sélectionner un mode de freinage auxiliaire dans lequel le frein ralentisseur est activé pour agir lorsqu'il est souhaité d'obtenir une action de freinage qu'il est possible d'obtenir au moyen dudit dispositif de freinage auxiliaire.
le procédé comprenant en outre les étapes consistant à :
- activer ledit frein ralentisseur (26) par actionnement dudit levier lorsqu'une action de freinage doit être appliquée au véhicule pendant la conduite en descente,
- calculer, sur la base de valeurs de paramètres des conditions de conduite du véhicule, si le dispositif de freinage auxiliaire est apte à obtenir à lui seul ladite action de freinage qui doit être appliquée au véhicule , et
- activer automatiquement ledit dispositif de freinage de service à friction (18) pour assister ledit dispositif de freinage auxiliaire dans le freinage du véhicule lorsque le résultat dudit calcul est que le dispositif de freinage auxiliaire n'est pas capable à lui seul d'obtenir ladite action de freinage sur le véhicule, **caractérisé en ce que**, dans ladite étape de calcul, un ordre de changement de rapport pendant une conduite en descente est considéré comme une desdites conditions de conduite du véhicule, qu'il est calculé si ledit dispositif de freinage auxiliaire (25) est apte à maintenir la vitesse du véhicule dans une plage prédéterminée pendant un changement de rapport dans les conditions existantes, et que ledit dispositif de freinage de service à friction (18) est activé, à la suite de l'activation dudit frein ralentisseur (26) exécutée par actionnement dudit levier, pour assister ledit dispositif de freinage auxiliaire lorsqu'il est déterminé par ledit calcul qu'il ne sera pas possible de maintenir la vitesse du véhicule dans ladite plage par une action de freinage du seul dispositif de freinage auxiliaire pendant une action de changement de rapport.

9. Procédé selon la revendication 8, **caractérisé en ce qu'**il comprend les étapes consistant à :
- mesurer la vitesse du véhicule,
- baser ledit calcul sur une information relative à la vitesse réelle du véhicule et sur une information relative à une valeur du couple de freinage total correspondant à ladite action de freinage qui doit être appliquée au véhicule, et
- déterminer que ledit dispositif de freinage auxiliaire (25) n'est pas capable d'obtenir à lui seul ladite action de freinage qui doit être appliquée au véhicule si la vitesse du véhicule est au-dessous d'une première valeur de vitesse prédéterminée pour une valeur donnée dudit couple de freinage total.

10. Procédé selon la revendication 9, **caractérisé en ce que**, dans ladite étape de détermination, on utilise ledit premier niveau de vitesse prédéterminée, qui décroît lorsque la valeur dudit couple de freinage total croît.

11. Procédé selon une quelconque des revendications 8 à 10, **caractérisé en ce que**, dans ladite étape de calcul, ledit calcul est basé sur une information relative à une valeur du couple de freinage total qui correspond à ladite action de freinage qui doit être appliquée au véhicule, et cette valeur de couple de freinage total est comparée à une valeur seuil de couple de freinage total prédéterminée et il est déterminé que le dispositif de freinage auxiliaire (25) n'est pas capable à lui seul d'obtenir ladite action de freinage qui doit être appliquée au véhicule lorsque ladite valeur du couple de freinage total est supérieure à la valeur seuil du couple de freinage total.

12. Procédé selon une quelconque des revendications 8 à 11, **caractérisé en ce qu'**il comprend l'étape consistant à mesurer la vitesse du véhicule, **en ce que**, dans ladite étape de calcul, une information relative à la vitesse réelle du véhicule est prise en considération, **en ce qu'**il est déterminé que ledit dispositif de freinage auxiliaire (25) n'est pas capable à lui seul d'obtenir ladite action de freinage qui doit être appliqué au véhicule dès que la vitesse du véhicule est au-dessous d'une seconde valeur de vitesse prédéterminée pendant la conduite en descente et qu'une action de freinage doit être appliquée au véhicule, et **en ce que** ledit dispositif de freinage de service à friction (18) est alors activé automatiquement pour assister ledit dispositif de freinage auxiliaire dans le freinage du véhicule à la suite de l'activation dudit frein ralentisseur (26) exécutée par actionnement dudit levier.

13. Procédé selon la revendication 8, **caractérisé en ce que**, dans ladite étape de calcul, il est calculé si ledit dispositif de freinage auxiliaire (25) peut être capable, dans les conditions existantes de conduite du véhicule, de maintenir la vitesse du véhicule à un niveau sensiblement constant pendant un changement de rapport lorsqu'un ordre est donné d'exécuter un changement de rapport pendant la conduite en descente, et **en ce que** ledit dispositif de freinage de service à friction (18) est activé, à la suite de l'activation dudit frein ralentisseur (26) exécutée par actionnement dudit levier pour freiner le véhicule pour l'exécution d'un changement de rapport pendant la conduite en descente, pour assister ledit dispositif de freinage auxiliaire dans le freinage du véhicule lorsqu'il est déterminé par ledit calcul que ledit dispositif de freinage auxiliaire ne sera pas capable à lui seul de maintenir la vitesse du véhicule à un niveau sensiblement constant pendant ledit changement de rapport.

14. Procédé selon la revendication 8 ou 13, qui est exécuté pour commander le freinage d'un véhicule automobile équipé d'une boîte de vitesses automatique ou semi-automatique (14), **caractérisé en ce que**, dans ladite étape de calcul, un ordre de changement de rapport pendant la conduite en descente est considéré comme une desdites conditions de conduite du véhicule, qu'il est calculé si ledit dispositif de freinage auxiliaire (25) est apte à maintenir la vitesse du véhicule à un niveau tel qu'un couple zéro puisse être obtenu sur un embrayage de la boîte de vitesses pendant le changement de rapport sans qu'il soit nécessaire d'élever le nombre de tours d'un arbre de sortie du moteur du véhicule au-dessus d'un niveau prédéterminé, et qu'il est déterminé que ledit dispositif de freinage auxiliaire n'est pas capable à lui seul d'obtenir ladite action de freinage lorsque ceci n'est pas possible.

15. Programme d'ordinateur pouvant être chargé dans la mémoire interne d'un ordinateur inclus dans un véhicule, lequel programme d'ordinateur comprend un code de programme d'ordinateur sous l'effet duquel, pour un véhicule équipé d'une boîte de vitesses (14), d'au moins un essieu (2-4) équipé de freins de service à friction (19-24), d'un dispositif de freinage de service à friction (18) apte à agir sur les freins de service à friction (19-24) de l'au moins un essieu (2-4) pour obtenir une action de freinage, d'une pédale de frein servant à activer au moins les freins de service à friction (19-24) de l'au moins un essieu (2-4) par l'intermédiaire du dispositif de freinage de service à friction (18), et d'un dispositif de freinage auxiliaire (25) apte à agir sur un essieu moteur du véhicule pour obtenir une action de freinage, et comprenant un frein ralentisseur (26) et un levier (40) servant à activer le frein ralentisseur à la main, l'ordinateur :
- obtient un mode de freinage auxiliaire dans lequel le frein ralentisseur est activé pour agir lorsqu'il est souhaité d'obtenir une action de freinage qu'il est possible d'obtenir au moyen dudit dispositif de freinage auxiliaire,
- obtient l'activation dudit frein ralentisseur (26) exécutée par actionnement dudit levier lorsqu'une action de freinage doit être appliquée au véhicule pendant la conduite en descente,
- calcule, sur la base de valeurs de paramètres des conditions de conduite du véhicule, si ledit dispositif de freinage auxiliaire est capable à lui seul d'obtenir ladite action de freinage qui doit être appliquée au véhicule, et
- obtient l'activation dudit dispositif de freinage de service à friction (18) pour assister ledit dispositif de freinage auxiliaire (25) dans le freinage du véhicule lorsque le résultat dudit calcul est que ledit dispositif de freinage auxiliaire n'est pas capable à lui seul d'obtenir ladite action de freinage qui doit être appliquée au véhicule, **caractérisé en ce que** ledit programme d'ordinateur comprend un code de programme d'ordinateur sous l'effet duquel l'ordinateur :
- considère un ordre de changement de rapport pendant la conduite en descente dans le calcul comme une desdites conditions de conduite du véhicule,
- calcule si ledit dispositif de freinage auxiliaire (25) est apte à maintenir la vitesse du véhicule dans une plage prédéterminée pendant un changement de rapport dans les conditions existantes, et
- obtient, à la suite de l'activation dudit frein ralentisseur (26) exécutée par actionnement manuel dudit levier, l'activation dudit dispositif de freinage de service à friction (18) pour assister ledit dispositif de freinage auxiliaire lorsqu'il est déterminé par ledit calcul qu'il ne sera pas possible de maintenir la valeur de vitesse du véhicule dans ladite plage par l'action de freinage du seul dispositif de freinage auxiliaire pendant une action de changement de rapport.

16. Programme d'ordinateur selon la revendication 15, **caractérisée en ce que** le programme d'ordinateur comprend un code de programme d'ordinateur sous l'effet duquel l'ordinateur :
- obtient une mesure de la vitesse du véhicule,
- base ledit calcul sur une information relative à la vitesse réelle du véhicule et sur une information relative à une valeur d'un couple de freinage total correspondant à l'action de freinage qui doit être appliquée au véhicule et
- détermine que ledit dispositif de freinage auxiliaire (25) n'est pas capable à lui seul d'obtenir ladite action de freinage qui doit être appliquée au véhicule si la vitesse du véhicule est au-dessous d'une première valeur de vitesse prédéterminée pour une valeur donnée dudit couple de freinage total.

17. Programme d'ordinateur selon la revendication 16, **caractérisé en ce que** le programme d'ordinateur comprend un code de programme d'ordinateur sous l'effet duquel l'ordinateur :
- utilise un premier niveau de vitesse prédéterminé précité qui décroît lorsque la valeur dudit couple de freinage total croit, dans ladite détermination.

18. Programme d'ordinateur selon une quelconque des revendications 15 à 17, **caractérisé en ce que** ledit programme d'ordinateur comprend un code de programme d'ordinateur sous l'effet duquel l'ordinateur :
- base ledit calcul sur une information relative à une valeur du couple de freinage total qui correspond à ladite action de freinage qui doit être appliquée au véhicule,
- compare cette valeur du couple de freinage total à une valeur de seuil de couple de freinage total prédéterminée, et
- détermine que le dispositif de freinage auxiliaire (25) n'est pas capable à lui seul d'obtenir ladite action de freinage qui doit être appliquée au véhicule lorsque ladite valeur du couple de freinage total est supérieure à ladite valeur seuil de couple de freinage total.

19. Programme d'ordinateur selon une quelconque des revendications 15 à 18, **caractérisé en ce que** le programme d'ordinateur comprend un code de programme d'ordinateur sous l'effet duquel l'ordinateur :
- obtient une mesure de la vitesse du véhicule,
- prend une information relative à la vitesse réelle du véhicule en considération dans ce calcul,
- détermine que ledit dispositif de freinage auxiliaire (25) n'est pas capable à lui seul d'obtenir ladite action de freinage qui doit être appliquée au véhicule dès que la vitesse du véhicule est au-dessous d'une seconde valeur de vitesse prédéterminée pendant la conduite en descente et qu'une action de freinage doit être appliquée au véhicule, et
- obtient automatiquement, à la suite de l'activation dudit frein ralentisseur (26) exécutée par actionnement manuel dudit levier, l'activation dudit dispositif de freinage de service à friction (18) pour assister ledit dispositif de freinage auxiliaire dans le freinage du véhicule lorsque la vitesse du véhicule est au-dessous de ladite seconde valeur de vitesse prédéterminée.

20. Programme d'ordinateur selon la revendication 15, **caractérisé en ce que** le programme d'ordinateur comprend un code de programme d'ordinateur sous l'effet duquel l'ordinateur :
- calcule si ledit dispositif de freinage auxiliaire (25) peut être capable, dans les conditions de conduite existantes du véhicule, de maintenir la vitesse du véhicule à un niveau sensiblement constant pendant un changement de rapport lorsqu'un ordre est donné d'exécuter un changement de rapport pendant la conduite en descente, et
- obtient, à la suite de l'activation dudit frein ralentisseur (26) exécutée par actionnement dudit levier pour freiner le véhicule pour exécuter un changement de rapport pendant la conduite en descente, l'activation dudit dispositif de freinage de service à friction (18) pour assister ledit dispositif de freinage auxiliaire dans le freinage du véhicule lorsqu'il est déterminé par ledit calcul que ledit dispositif de freinage auxiliaire ne sera pas capable à lui seul de maintenir la vitesse du véhicule à un niveau sensiblement constant pendant ledit changement de rapport.

21. Programme d'ordinateur selon la revendication 15 ou 20, **caractérisé en ce que** le programme d'ordinateur comprend un code de programme d'ordinateur sous l'effet duquel, pour un véhicule équipé d'une boîte de vitesses automatique ou semi-automatique, l'ordinateur :
- considère un ordre de changement de rapport pendant la conduite en descente dans ledit calcul comme une desdites conditions de conduite du véhicule,
- calcule si ledit dispositif de freinage auxiliaire (25) est capable de maintenir la vitesse du véhicule à un niveau tel qu'un couple zéro puisse être obtenu sur un embrayage de la boîte de vitesses pendant un changement de rapport sans qu'il soit nécessaire d'élever le nombre de tours d'un arbre de sortie d'un moteur du véhicule au-dessus d'un niveau prédéterminé, et
- détermine que ledit dispositif de freinage auxiliaire n'est pas capable à lui seul d'obtenir ladite action de freinage lorsque ceci n'est pas possible.

22. Produit programme d'ordinateur comprenant un support de stockage de données lisibles par une unité électronique, un programme d'ordinateur selon une quelconque des revendications 15 à 21 étant stocké sur ledit support de stockage de données.

23. Unité électronique comprenant un moyen d'exécution, une mémoire connectée au moyen d'exécution et un support de stockage de données connecté au moyen d'exécution, un programme d'ordinateur selon une quelconque des revendications 15 à 21 étant stocké sur ledit support de stockage de données.
